Europäisches Patentamt

European Patent Office

Office européen des brevets

(19)

(11) Veröffentlichungsnummer: **0 185 204**
**A2**

(12) # EUROPÄISCHE PATENTANMELDUNG

(21) Anmeldenummer: **85114582.1**

(22) Anmeldetag: **16.11.85**

(51) Int. Cl.⁴: **F 16 K 3/316**

(30) Priorität: **19.12.84 CH 6034/84**

(43) Veröffentlichungstag der Anmeldung:
**25.06.86 Patentblatt 86/26**

(84) Benannte Vertragsstaaten:
**DE FR GB IT SE**

(71) Anmelder: **SISTAG, Maschinenfabrik Sidler Stalder AG**
**Blumenstein**
**CH-6274 Eschenbach(CH)**

(72) Erfinder: **Stalder, Hans**
**Haus La Brigantine**
**CH-6274 Eschenbach(CH)**

(72) Erfinder: **Sidler, Hans**
**Hubenfeldstrasse 18**
**CH-6274 Eschenbach(CH)**

(74) Vertreter: **Willi, Anton, J.**
**Alsenmattstrasse 2**
**CH-8800 Thalwil(CH)**

(54) **Flachschieber.**

(57) Die Führungsnut (4b) für die Schieberplatte (7) ist beidseitig durch in den Durchlasskanal (2) hineinragende Führungsleisten (8a, 8b) begrenzt. Diese Führungsleisten (8a, 8b) weisen in Abständen Kerben (9a, 9b) auf. Die Kerben (9a) der einen Führungsleiste (8a) sind gegenüber den Kerben (9b) der andern Führungsleiste (8b) versetzt. Bei offenem Schieber wird durch die zuströmseitigen Kerben (9a) in die Führungsnut (4b) eindringendes Medium in der letzteren umgelenkt, bevor es die Führungsnut durch die abströmseitigen versetzten Kerben (9a) wieder verlässt. Damit wird in der Führungsnut eine zur Selbstreinigung gegen Ablagerungen führende Längsströmung erzeugt. Beim Schliessvorgang der Schieberplatte findet über den gesamten Schliessweg-Bereich eine permanente Selbstreinigung statt. Der Schieber eignet sich deshalb besonders zur Verwendung in Förderlei-tungen für dickstoffartige, staubförmige, körnige oder fest-stoffhaltige Medien.

EP 0 185 204 A2

Fig. 1

- 1 -

SISTAG, Maschinenfabrik
Sidler Stalder AG          CH-6274 Eschenbach

Flachschieber

Gegenstand der Erfindung ist ein Flachschieber, insbesondere zum Absperren von dickstoffartige staubförmige oder körnige Medien führenden Förderleitungen, mit einer im Schiebergehäuse vorgesehenen Führungsnut für die Schieberplatte, wobei die Führungsnut seitlich begrenzende, in den Kreisquerschnitt aufweisenden Durchflusskanal des Schiebers hineinragende Führungsleistenpaare je mindestens zwei mit Abstand aufeinanderfolgende Kerbenpaare aufweisen, die beim Schliessen der Schieberplatte mit Scherkanten am unteren Schliessrand der Schieberplatte zusammenwirkende Abstreifkanten aufweisen.

Ein Flachschieber dieser Bauart ist beispielsweise in der CH-Patentschrift ...... ( 6908/81) beschrieben. Die Kerben jedes Kerbenpaares fluchten in Durchströmrichtung miteinander. Während der Offenzeit des Schiebers durchspült Medium die miteinander fluchtenden Kerben und die dazwischen liegende Nutpartie, während der zwischen den Kerbenpaaren liegende Nutbereich einen praktisch strömungsfreien Stauraum bildet, in welchem sich Feststoffe ablagern können. Solche sich insbesondere an den Führungsflächen der durch die Kerben unterbrochenen Führungsleisten ablagernde Feststoffe des Fördermediums können beim Schliessen des Schiebers durch die Scherkanten der Schieberplatte mechanisch nach unten gestossen und im Zusammenwirken mit den Abstreifkanten der Kerben in die letzteren abgestreift werden, wo sie vom Medienstrom erfasst und stromabwärts ausgespült werden. Bei längerer Offenzeit des Schiebers können sich aber die genannten Ablagerungen in den zwischen den Kerbenpaaren liegenden Partien der Führungsnut derart verfestigen und zu derart dicken Schichten aufbauen, dass beim anschliessenden Schliessen des Schiebers ein erheblicher Kraftaufwand erforderlich ist, um das Abschaben dieser Ablagerungen zu bewirken; das einwandfreie Schliessen der mit möglichst geringem Spiel geführten Schieberplatte kann dadurch behindert werden. Das Abschaben festsitzender Ablagerungen kann ausserdem mit der Zeit auch zu einer Beschädigung der Führungsflächen der Führungsleisten führen.

Die vorliegende Erfindung bezweckt deshalb die Schaffung eines Flachschiebers der genannten Art, bei welchem Ablagerungen an den zwischen den Kerben liegenden Partien der Führungsnut und insbesondere an den Führungsflächen der Führungsleisten weitgehend verunmöglicht sind und auch bei längeren Offenzeiten des Schiebers der Aufbau von relativ dicken, festsitzenden Ablagerungsschichten vermieden werden kann. Dies soll erfindungsgemäss dadurch erreicht werden, dass insbesondere im Bereich der die Führungsnut begrenzenden mit Kerben versehenen Führungsleisten sich eine Selbstreinigung durch den Mediumstrom einstellt.

Zu diesem Zweck ist der erfindungsgemässe Flachschieber dadurch gekennzeichnet, dass die Kerben in einer Führungsleiste jedes Führungsleistenpaares zu jenen in der andern Führungsleiste versetzt angeordnet sind.

Dank dieser Versetzung der in den Führungsleisten jedes Führungsleistenpaares vorgesehenen Kerben liegt jeder Kerbe der einen Führungsleiste wenigstens ein Teil der Führungsfläche der andern Führungsleiste gegenüber; dies hat in Offenlage des Schiebers zur Folge, dass durch die Kerben der zuströmseitigen Führungsleiste in die Führungsnut eindringendes Medium durch die gegenüberliegende Führungsflächenpartie in Längsrichtung der Führungsnut umgelenkt wird, bevor es durch eine Kerbe in der abströmseitigen Führungsleiste die Führungsnut wieder verlässt. Dabei bestreicht dieses Medium die zwischen den versetzten Kerben liegende Partie der Führungsnut, so dass sich an den betreffenden Führungsflächen keine dickeren Schichten von Ablagerungen bilden können.

Zweckmässig entspricht die Versetzung der Kerben etwa dem Mass der grössten Kerbenöffnungsweite (e), wobei die optimale Durchspülung der Führungsnut dann erreicht wird, wenn auch die grösste Oeffnungsweite der Kerben etwa gleich oder nur wenig grösser als die halbe Kerbenteilung ist. Die Tiefe der Kerben ist zweckmässig etwas kleiner als die Tiefe der innen durch eine Dichtung begrenzten Führungsnut.

Der Querschnitt der Kerben in einer Ebene parallel zur Schieberplatte ist zweckmässig keil- oder U-förmig, kann aber auch dreieckförmig oder rechteckförmig sein, wobei alle Kerben unter sich gleiche Querschnittsfläche aufweisen können. Um aber, besonders bei grösseren Schiebern, mit oberhalb des Schieberdurchlasses relativ langen ungekerbten Führungsnutpartien zu gewährleisten, dass beim Schliessen des Schiebers aus diesen Nutpartien von den Scherkanten der Schieberplatte nach unten gestossene Ablagerungen von den diesen Nutpartien am nächsten liegenden Kerben tatsächlich aufgenommen und dort in den Durchlass ausgespült werden, kann es zweckmässig sein, diese oberen Kerben etwas grösser als die übrigen zu machen.

Zweckmässig ist der untere in Querrichtung abgesetzte und mit den Scherkanten versehene Schieberplattenrand teilzylindrisch ausgebildet, wobei sein Durchmesser etwas grösser ist als die Plattenbreite. Dies führt dazu, dass der untere Plattenrand durch eine Querkante in die zueinander parallelen Schmalseiten der Schieberplatte übergeht und dass die segmentförmige untere Plattenpartie nur geringe Höhe aufweist. Entsprechend klein wird dann auch der in Offenlage des Schiebers zur Aufnahme dieser Segmentpartie der Schieberplatte erforderliche Abstand der üblichen Querdichtung vom Schieberdurchlass. Durch entsprechende Erweiterung der Führungsnut in den Eckpartien unterhalb und oberhalb des Schieberdurchlasses können dabei Spülecken gebildet sein, die in Offenlage des Schiebers vom Mediumstrom durchspült und damit von grösseren Ablagerungen frei gehalten werden. Damit wird erreicht, dass praktisch die ganze Plattenführung einer gewissen Selbstreinigung unterliegt.

Eine bezüglich Freihaltung von Ablagerungen, die das einwandfreie Schliessen des Schiebers behindern können, kritische Stelle ist stets die untere mit dem Durchlass mehr oder weniger fluchtende und mit der Scheitelpartie der Schieberplatte zusammenwirkende Dichtungspartie. Zweckmässig liegt hier die Dichtung in einer gegen den Durchlass hin verengten Nut des zuströmseitigen Gehäuseteils, wobei die diese Nut abströmseitig begrenzende Partie des abströmseitigen Gehäuseteils zweckmässig um wenige Millimeter in den zylindrischen Durchlass überstehend ausgebildet ist, um dem unteren Schieberplattenrand in Schliesslage als Anschlag zu dienen. Diese in Zuströmrichtung unmittelbar hinter der die Dichtung enthaltenden Nut liegende Anschlagfläche wirkt in Offenlage des Schiebers als Prallwand, was zu Ablagerungen vor dieser Prallwand im Bereich der Dichtung führen kann. Es hat sich nun als besonders vorteilhaft erwiesen, den abgesetzten unteren Plattenrand zuströmseitig mit einer im Querschnitt bogenförmigen Kehlung auszubilden. Diese Kehlung bewirkt unmittelbar vor dem Schliessen, dass das auf sie auftreffende Medium nach unten gegen die Dichtung hin umgelenkt wird, wobei der hier entstehende Wirbel die vor der Anschlagfläche liegende Dichtungspartie von Ablagerungen freispülen kann. Im seitlichen Bereich der unteren Spülecken läuft die Anschlagfläche jeweils aus, um damit in diesen Bereichen einen absatzfreien niveaugleichen Durchgang zu bilden.

Die vorangehend beschriebenen Massnahmen führen somit zu einer Selbstreinigung im ganzen den Durchlass umgebenden Führungsbereich der Schieberplatte, was zusammen mit der durch das Zusammenwirken der Scherkanten der Schieberplatte mit den Abstreifkanten der Kerben zusätzlich vorgesehenen mechanischen Reinigung der Führungs-

- 6 -

nuten jederzeit einen einwandfreien Lauf der Schieberplatte in der Führungsnut und ein sicheres und leichtgängiges Schliessen des Schiebers gewährleistet.

In der beiliegenden Zeichnung ist die Erfindung beispielsweise dargestellt. Darin zeigt:

Fig. 1    eine Ansicht des Schiebers, in der linken Figurenhälfte, von der Abströmseite her gesehen mit in der rechten Figurenhälfte weggenommenen abströmseitiger Gehäusehälfte (gezeigt von der Abströmseite her),

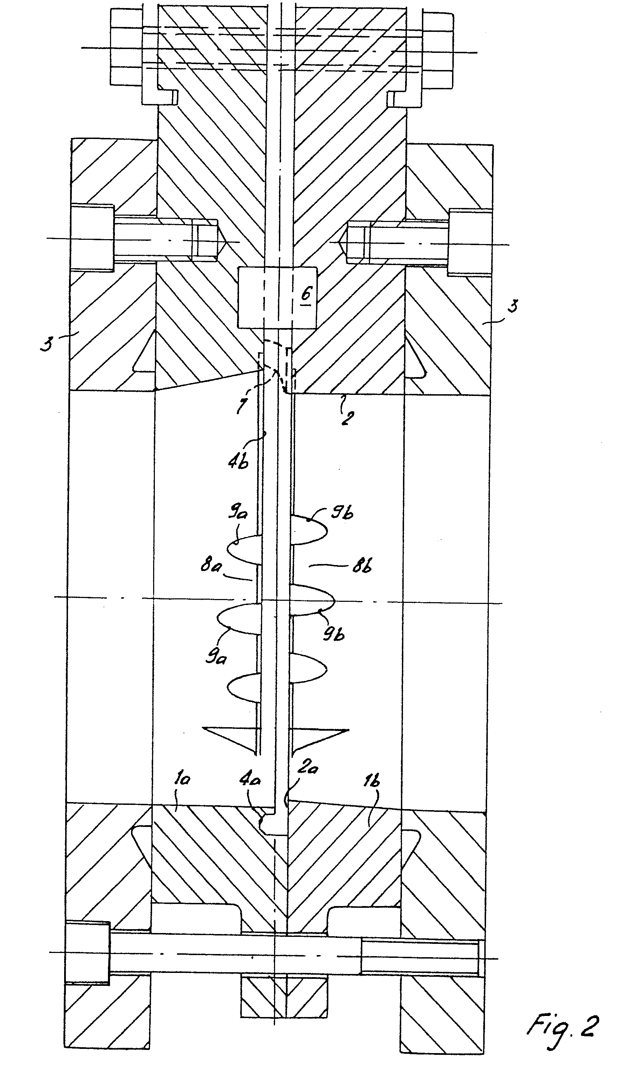

Fig. 2    einen Axialschnitt durch den Schieber ohne Schieberplatte,

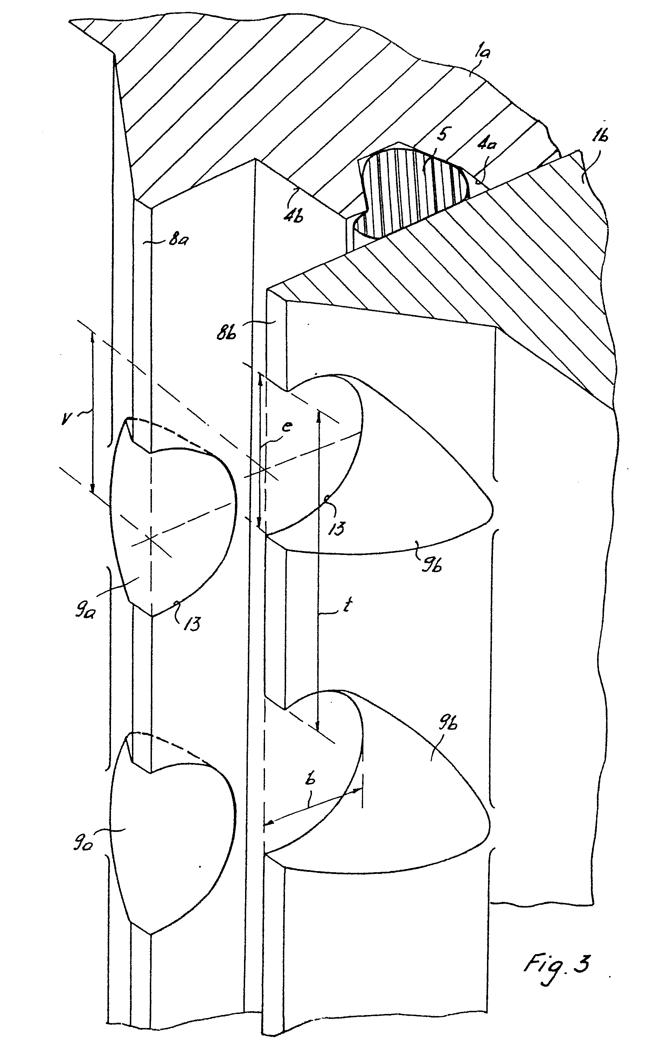

Fig. 3    in grösserem Massstab und schaubildlich einen Teil einer Führungsnut des Schiebers nach Fig. 1, und

Fig. 4    in grösserem Massstab eine Einzelheit aus Fig.
und 5    2 unmittelbar vor bzw. nach dem Schliessen der Schieberplatte.

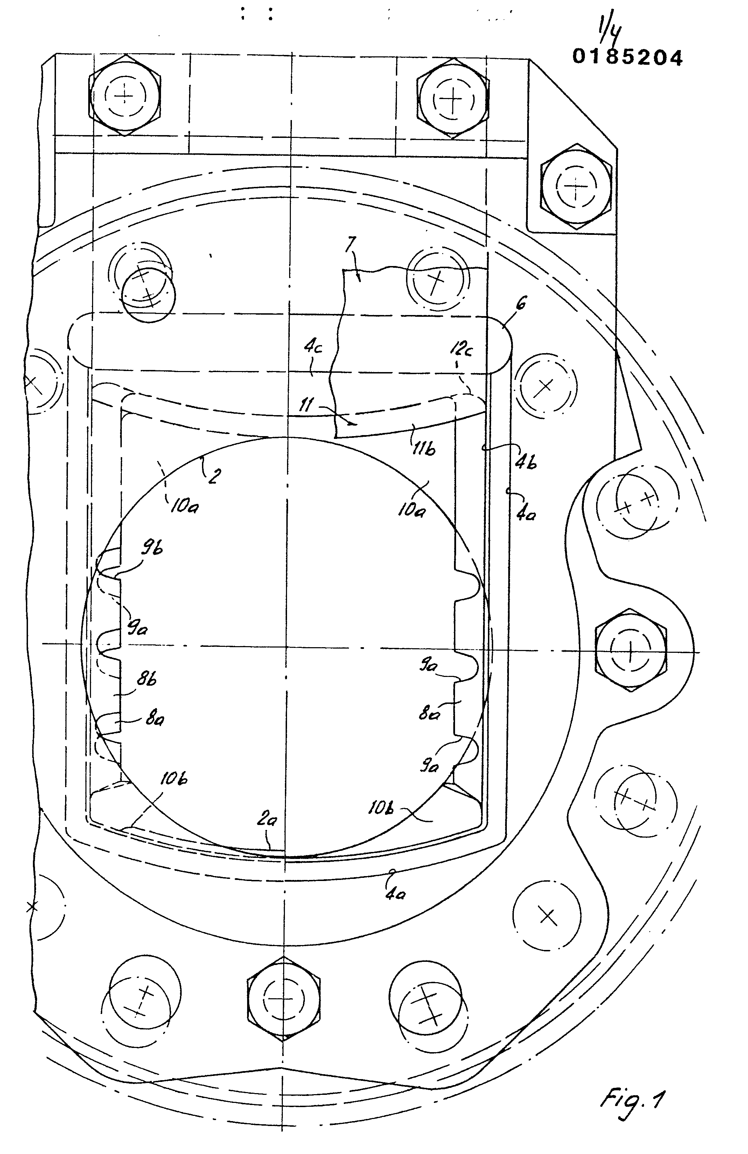

Der gezeichnete Flachschieber besitzt ein zweiteiliges Gehäuse 1a, 1b mit zylindrischem Durchflusskanal 2. Die Gehäuseteile 1a, 1b können zusammen wie gezeigt mit Zusatzflanschen 3 ( für spezielle Flanschbohrungen) miteinander verschraubt werden. Im zuströmseitigen Gehäuseteil 1a ist eine abgesetzte den Durchflusskanal 2 U-förmig umschliessende Ausnehmung 4 vorgesehen. Die verengte Partie 4a der Ausnehmung 4 dient als Dichtungsnut zur Aufnahme einer Dichtung 5, die in bekannter Weise bis in den Bereich einer Querdichtung 6
führt. Die erweiterte Partie 4b der Ausnehmung 4 dient
als Führungsnut für die Schieberplatte 7. Diese Führungsnut 4b ist seitlich durch Führungsleistenpaare
8a, 8b begrenzt, die in den Durchflusskanal 2 hineinragen, wo deren Aussenseiten abgeschrägt sind, um nicht
strömungshemmende Prallflächen bzw. Hinterschneidungen
zu bilden. Jedes dieser Führungsleistenpaare 8a, 8b
besitzt, beim gezeichneten Beispiel, drei im Abstand
voneinander angeordnete Kerbenpaare 9a, 9b, wobei
die Kerben 9a der einen Führungsleiste 8a gegenüber
den Kerben 9b der andern Führungsleiste 8b in Durchströmrichtung zueinander versetzt sind. Die Kerbenteilung t ist etwa doppelt so gross wie die Oeffnungsweite e der Kerben, während die Kerbentiefe b etwas
kleiner ist als die Tiefe der Führungsnut 4b, sodass
auch an den gekerbten Stellen der Führungsleisten
noch eine Führung der Schieberplatte gewährleistet
ist. Die Versetzung v der Kerben der einen Führungsleiste zu den Kerben der andern Führungsleiste entspricht zweckmässig etwa der Oeffnungsweite der Kerben. Es versteht sich, dass Zahl, Grösse, Teilung und
Versetzung der Kerben je nach Grösse des Schiebers, d.
h. des Durchmessers des Durchflusskanals 2, verschieden sein können. In der Praxis hat sich gezeigt, dass
bei Schiebern mit Nennweiten von z.B. 50 bis 300 mm
die Kerbenteilung t zweckmässig zwischen 20 und 25 mm
liegt, die Kerbenversetzung v zwischen 8 und 12 mm,
die Kerbentiefe b zwischen 7 und 10 mm (bei einer
Nuttiefe zwischen 9 und 12 mm) und die Kerbenöffnungsweite e zwischen 10 und 15 mm. Beim gezeichneten Beispiel ist der zur Führungsebene parallele Querschnitt
der Kerben keilförmig mit stark gerundeter, dem Nutboden benachbarter Endpartie; zweckmässig divergieren die inneren scharfen Kerbenkanten gegen die Kerbenöffnung hin unter einem Winkel zwischen 5 und 15° (Fig. 1); sie könnten an der Kerbenöffnung aber auch parallel zueinander verlaufen.

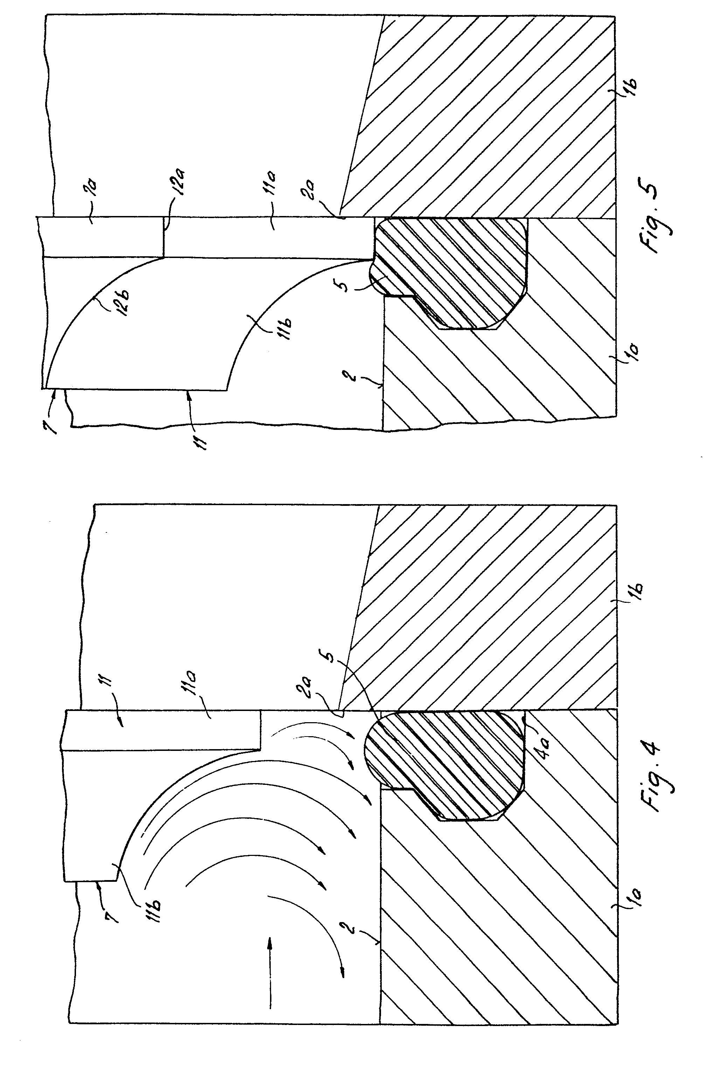

Die seitlichen Führungsnuten 4b sind aus dem Bereich des Durchlasskanals 2 hinaus nach oben zu einer unmittelbar unter der Querdichtung 6 liegenden, segmentförmigen Quernutpartie 4c geführt, während sie unten zwar ausserhalb des Durchlasskanals 2, jedoch im Abstand über der segmentförmigen Bodenpartie der Dichtungsnut 4a, endet. Die oben zwischen den die Führungsnuten 4b und 4c bzw. unten zwischen den Führungsnuten 4b und der Dichtungsnut 4a liegenden Gehäuseteile sind unter Bildung von Spülecken 10a bzw. 10b gegen den Durchlass hin ausgenommen. Wie aus der Zeichnung ersichtlich, ist die untere Scheitelpartie der den Durchlasskanal 2 begrenzenden Innenwand des abströmseitigen Gehäuseteils 1b gegen die Trennebene der Gehäuseteile hin leicht ansteigend ausgebildet, sodass sie im Scheitelpunkt des Durchlasskanals einige mm, in der Praxis je nach Nennweite des Schiebers 2 bis 5 mm übersteht. Diese überstehende Wandpartie 2a dient dem unteren Schliessrand 11 der Schieberplatte 7 in deren Schliesslage als Anschlag. Dieser segmentförmige Schliessrand 11 besitzt einen etwas grösseren Durchmesser als die Plattenbreite, sodass seine teilzylindrische Unterfläche 11a mit den Schmalseiten 7a der Platte 7 eine Kante 12a bildet. Der Schliessrand 11 der Schieberplatte 7 ist ausserdem in Richtung der Plattendicke abgesetzt, wobei die Absetzung durch eine Kehlung 11b gebildet ist und durch eine entsprechend gebogene, die Kante 12a fortsetzende Kante 12b in die Schmalseite 7a der Schieberplatte 7 übergeht (Fig.5).
Die Kehlung 11b des Schliessrandes 11 der Schieberplatte 7 ist stromaufwärts gerichtet. Die abgesetzte zuströmseitige Kante des Schliessrandes 11 verläuft bis auf kurze Endabschnitte 12c gleich wie die Unterkante der Fläche 11a; die genannten Endabschnitte 12c dagegen sind konkav gekrümmt und enden in der seitlichen Kehlungskante 12b. Diese Endabschnitte 12c bilden Scherkanten zum Zusammenwirken mit den als Abstreifkanten wirkenden Innenkanten 13 der Kerben 9a, 9b. Bei weniger zum Verschmutzen neigenden Medien können die Endabschnitte 12c auch nicht konkav abgebogen, sondern der Krümmung der abgesetzten Kante folgend zur Plattenschmalseite geführt sein.

Bei offenem Schieber liegt der dank des relativ grossen Durchmessers nur eine geringe Höhe aufweisende Schliessrand 11 der Schieberplatte 7 (Fig. 1 links) unmittelbar über dem Scheitel des Durchlasskanals 2 und in kleinem Abstand von der Querdichtung 6. Wie Fig. 1 zeigt, entspricht dabei die Segmentform des Schliessrandes 11 der Bogenform der Unterkante der Führungsnutpartie 4c und der Bodenpartie der Dichtungsnut 4a. Dies führt nicht nur zu relativ kleinen oberen und unteren Spülecken 10a, 10b, sondern gestattet auch die Einhaltung einer relativ geringen Bauhöhe der oberen Führungspartie der Schieberplatte. Beim Schliessen des Schiebers bewegt sich die Schieberplatte 7 nach unten, wobei die Schmalseitenkanten 12a, 12b eventuell am Boden der Führungsnuten 4b bzw. an der Dichtung 5 festsitzende Ablagerungen nach unten stossen; gleichzeitig bewirken aber auch die zuströmseitigen Scherkanten 12c ebenso wie die in der Führungsnut liegenden Endabschnitte der abströmseitigen Unterkante des Schliessrandes 11 ein Abschaben von Ablagerungen von den Führungsflächen. Die Randpartien des Schliessrandes 11 schieben dabei die abgeschabten Ablagerungen in den Führungsnuten nach unten, wo sie in den Bereich des ersten Kerbenpaares 9a, 9b gelangen und im Zusammenwirken der Scherkanten 12c mit den Abstreifkanten 13 der Kerben in diese Kerben hinein abgestreift werden; analog werden Ablagerungen in den zwischen den Kerben liegenden Führungsnutabschnitten abgeschabt und in das nachfolgende Kerbenpaar bzw. in die unteren Spülecken hinein abgestreift. Da die Kerben 9a, 9b ebenso wie die oberen und unteren Spülecken dem Mediumstrom ausgesetzt sind, werden die anfallenden Ablagerungen beim Schliessvorgang laufend aus den Kerben bzw. Spülecken bei pneumatischem Betrieb ausgeblasen, resp. bei hydraulischem Betrieb ausgestossen und mitgeschwemmt. Die Versetzung der Kerben 9a gegenüber den Kerben 9b hat anderseits in Offenlage der Schieberplatte 7 bewirkt, dass Teile des Mediumstroms die durch die zuströmseitigen Kerben 9a der einen Führungsleiste 8a in die Führungsnut 4b eindringen, in der letzteren umgelenkt werden und erst nach Bestreichen einer der Kerbenversetzung entsprechenden Nutpartie diese durch die nächstliegende Kerbe 9b der andern Führungsleiste 8b wieder verlassen können. Dieses dauernde Bestreichen von Teilen der Führungsflächen der Führungsnut verhindert, dass sich an diesen Führungsflächen dickere nur schwer abschabbare Schichten von Ablagerungen bilden können. Damit ist nicht nur im Bereich der oberen und unteren Spülecken 10a, 10b sondern auch innerhalb der im Bereich des Durchlasskanals 2 liegenden seitlichen Führungsnuten 4b eine wirksame Selbstreinigung gewährleistet.

- 11 -

Im Vorangehenden ist angenommen, dass alle Kerben gleiche Grösse bzw. Oeffnungsweite aufweisen. Da aber der oberhalb des Durchlasskanals 2 liegende ungekerbte gegen die Spülecken 10a hin offene Bereich der Führungsnut 4b relativ gross ist und sich dort bei längerer Offenhaltung des Schiebers grössere Ablagerungen bilden können, können die Kerben des obersten Kerbenpaares auch etwas grösser gewählt sein, sodass sie grössere Mengen an im oberen Führungsnutbereich abgeschabter Ablagerungen aufnehmen können.

Eine bezüglich Ablagerungen, die das einwandfreie Schliessen der Schieberplatte behindern können, besonders heikle Stelle ist die untere Scheitelpartie des Durchlasskanals 2, wo die überstehende Wandpartie 2a zuströmseitig eine Art Totraum erzeugt, in welchem Ablagerungen fast unvermeidbar sind. Wie aus Fig. 4 ersichtlich, bewirkt die ausgeprägte Kehlfläche 11b des Schliessrandes 11 der Platte 7 unmittelbar vor dem Schliessen, dass das auf diese Kehlfläche auftreffende Medium zu einem starken nach unten gerichteten Wirbel umgelenkt wird, der ohne weiteres in der Lage ist, Ablagerungen aus dem genannten Totraum zurück in den verbliebenen Mediumstrom hinein auszublasen bzw. auszuschwemmen. Damit ist auch hier eine wirksame Selbstreinigung gewährleistet, die beim weiteren Absenken der Schieberplatte 7 (Fig. 5) ein einwandfreies Schliessen des Schiebers ermöglicht.

- 1 -

PATENTANSPRUECHE

1. Flachschieber, insbesondere zum Absperren von dickstoffartige, staubförmige oder körnige Medien führenden Förderleitungen, mit einer im Schiebergehäuse (1a, 1b) vorgesehenen Führungsnut (4a) für die Schieberplatte (7), wobei die Führungsnut seitlich begrenzende, in den Kreisquerschnitt aufweisenden Durchflusskanal (2) des Schiebers hineinragende Führungsleistenpaare (8a, 8b) je mindestens zwei mit Abstand aufeinanderfolgende Kerbenpaare (9a, 9b) aufweisen, die beim Schliessen der Schieberplatte (7) mit Scherkanten (12a) am unteren Schliessrand (11) der Schieberplatte zusammenwirkende Abstreifkanten (13) aufweisen, dadurch gekennzeichnet, dass die Kerben (9a bzw. 9b) in der einen Führungsleiste (8a bzw. 8b) jedes Führungsleistenpaares zu den Kerben (9b bzw. 9a) in der andern Führungsleiste (8b bzw. 8a) versetzt angeordnet sind.

2. Flachschieber nach Anspruch 1, dadurch gekennzeichnet, dass die Kerbenversetzung (v) grösser als die halbe Kerbenöffnungsweite (e) ist.

3. Flachschieber nach Anspruch 2, dadurch gekennzeichnet, dass die Kerbenversetzung (v) etwa gleich der Kerbenöffnungsweite (e) und etwa gleich der halben Kerbenteilung (t) ist.

4. Flachschieber nach einem der Ansprüche 1 bis 3, dadurch gekennzeichnet, dass die Kerbentiefe (b) kleiner ist als die Tiefe der Führungsnut (4b).

5. Flachschieber nach einem der Ansprüche 1 bis 4, dadurch gekennzeichnet, dass die Kerben (9a, 9b) bogenförmigen oder dreieckförmigen oder rechteckförmigen Querschnitt aufweisen.

6. Flachschieber nach einem der Ansprüche 1 bis 5, dadurch gekennzeichnet, dass die Kerben des obersten Kerbenpaares (9a, 9b) jedes Führungsleistenpaares (8a, 8b) grössere Oeffnungsweite besitzen als die übrigen Kerben.

7. Flachschieber nach einem der Ansprüche 1 bis 6, dadurch gekennzeichnet, dass der teilzylindrische Schliessrand (11) der Schieberplatte, dessen Durchmesser grösser ist als die Plattenbreite, zuströmseitig durch eine Kehlung (11a) abgesetzt ist, wobei die mit der Plattenunterkante in ihrem Mittelbereich gleichlaufende durch die Kehlung zurückgesetzte Plattenkante die Scherkanten (12c) bildende Endabschnitte aufweist, die in der zwischen der Kehlung (11b) und den Plattenschmalseiten (7a) gebildeten gebogenen Kante (12b) enden, die ihrerseits zu der zwischen diesen Plattenschmalseiten (7a) und der teilzylindrischen Schliessrandfläche (11a) gebildeten Querkante (12a) führt.

8. Flachschieber nach Anspruch 7, dessen Gehäuse (1a, 1b) zweiteilig ist, wobei die Führungsnut (4a)mit der einen Führungsleiste (8a) im zuströmseitigen (1a), und die andere Führungsleiste (8b) im abströmseitigen Gehäuseteil (1b) vorgesehen ist, da-

- 3 -

durch gekennzeichnet, dass in der unteren Scheitelpartie des Durchlasskanals (2) die in der Trennebene der Gehäuseteile (1a, 1b) liegende Fläche des abströmseitigen Gehäuseteils (1b) um wenige mm in den Durchlasskanal (2) hineinragt und dem Schliessrand (11) der Schieberplatte (7) in deren Schliesslage als Anschlag (2a) dient.

9. Flachschieber nach Anspruch 8, dadurch gekennzeichnet, dass die Anschlagfläche (2a) im Bereich seitlicher Spülecken (10b) ausläuft.

Fig.1

Fig. 2

Fig. 3

Fig. 5

Fig. 4